# EUROPÄISCHE PATENTSCHRIFT

(11) **EP 4 392 807 B1**
(45) Veröffentlichungstag und Bekanntmachung des Hinweises auf die Patenterteilung: **27.08.2025**
(21) Anmeldenummer: 22762018.4
(22) Anmeldetag: 05.08.2022
(51) Int. Cl.: G01S 15/87, B60W 50/14, G01S 15/89, G01S 15/931

(54) **VERFAHREN ZUM ÜBERWACHEN EINER BODENFREIHEIT**
METHOD FOR MONITORING A GROUND CLEARANCE
PROCÉDÉ DE SURVEILLANCE D'UNE GARDE AU SOL

(30) Priorität: 24.08.2021 DE 102021121854
(43) Veröffentlichungstag der Anmeldung: 03.07.2024
(73) Patentinhaber: Valeo Schalter und Sensoren GmbH, 74321 Bietigheim-Bissingen (DE)
(72) Erfinder: POEPPERL, Maximilian, 96317 Kronach Neuses (DE); BECKER, Felix, 96317 Kronach Neuses (DE)
(74) Vertreter: Pothmann, Karsten
(86) Internationale Anmeldenummer: PCT/EP2022/072105
(87) Internationale Veröffentlichungsnummer: WO 2023/025569

(56) Entgegenhaltungen:
- DE-A1- 102011 012 409
- DE-A1- 102014 221 990
- DE-A1- 102018 130 914
- JP-A- S57 182 544

## Beschreibung

Die vorliegende Erfindung betrifft den Einsatz von Ultraschall-Messtechnik in Kraftfahrzeugen und insbesondere ein Verfahren zum Überwachen einer Bodenfreiheit unter einem Kraftfahrzeug, ein Computerprogrammprodukt, eine Vorrichtung und ein Kraftfahrzeug.

Kraftfahrzeuge werden mit Ultraschall-Sendeempfängern ausgestattet, die Ultraschall-Sendesignale in eine Umgebung des Kraftfahrzeugs aussenden und Ultraschall-Echosignale aus der Umgebung des Kraftfahrzeugs empfangen, um auf diese Weise Informationen über die Umgebung eines Kraftfahrzeugs zu erfassen und diese an ein Parkassistenzsystem, ein Fahrassistenzsystem oder dergleichen zu übermitteln.

Die DE 10 2018 221517 A1 beschreibt ein System, bei dem mit Ultraschall-Sendeempfänger, die im Unterboden eines Kraftfahrzeugs angeordnet sind, die Umgebung des Kraftfahrzeugs überwacht wird.

Die DE 10 2018 130914 A1 beschreibt ein System, das Objekte im Unterbodenbereich eines geparkten Kraftfahrzeugs erkennen soll. Hierbei wird zu zwei unterschiedlichen Zeitpunkten eine Ultraschallmessung im Unterbodenbereich durchgeführt, und die beiden Messungen werden miteinander verglichen. Die erste Messung erfolgt unmittelbar nach dem Abstellen des Kraftfahrzeugs und die zweite Messung zu einem Zeitpunkt, an dem geprüft werden soll, ob ein Objekt unter dem Kraftfahrzeug ist.

Aus der DE 102014221990 A1 ist ein Verfahren zur Vermeidung von Schäden an einem Fahrzeug bekannt, bei dem eine Geometrie einer kollisionsrelevanten Struktur einer Fahrbahnoberfläche in der Umgebung vermessen und mit einer aktuellen Konfiguration des Fahrzeugs verglichen wird.

Aus der DE 10 2011 012 409 A1 ist ein Flurförderzeug bekannt, das im frontseitigen Bereich ein Abstandssensor 12 als Bodenprofilermittlungseinrichtung aufweist.

Aus der JP S57182544 A ist ein Verfahren zur Erkennung von unüberwindbaren Untergrundstrukturen bekannt, das zwei nach unten gerichtete Ultraschallsensoren nutzt.

Insbesondere bei Offroad-Fahrzeugen besteht Bedarf an Lösungen zum Bestimmen einer Bodenfreiheit unter einem fahrenden Kraftfahrzeug.

Vor diesem Hintergrund liegt der vorliegenden Erfindung als Aufgabe zugrunde, ein verbessertes Verfahren zum Bestimmen einer Bodenfreiheit unter einem Kraftfahrzeug bereitzustellen.

Vorgeschlagen wird gemäß einem ersten Aspekt daher ein Verfahren zur Überwachung einer Bodenfreiheit unter einem Kraftfahrzeug, an dessen Unterboden mehrere zueinander beabstandete Ultraschall-Sendeempfänger angeordnet sind. Das Verfahren umfasst: a) Auswählen eines ersten Ultraschall-Sendeempfängers unter den mehreren Ultraschall-Sendeempfängern und Ansteuern des ersten Ultraschall-Sendeempfängers zum Senden eines Sendesignals; b) Auswählen eines zweiten Ultraschall-Sendeempfängers unter den mehreren Ultraschall-Sendeempfängern und Ansteuern des zweiten Ultraschall-Sendeempfängers zum Empfangen eines Empfangssignals, welches eine Reflexion des in Schritt a) gesendeten Sendesignals ist; c) Wiederholen der Schritte a) und b), wobei verschiedene Paare aus einem ersten und einem zweiten Ultraschall-Sendeempfänger ausgewählt werden, um ein jeweiliges Echosignal zu empfangen; d) Bestimmen eines Profils eines Bodens unter dem Kraftfahrzeug anhand der empfangenen Echosignale; und e) Bestimmen einer minimalen Bodenfreiheit unter dem Kraftfahrzeug durch Vergleich des bestimmten Profils des Bodens mit einem Unterbodenprofil des Kraftfahrzeugs.

Das vorgeschlagene Verfahren hat den vorteilhaften Effekt, dass dank Kenntnis der minimalen Bodenfreiheit unter dem Kraftfahrzeug Beschädigungen am Unterboden des Kraftfahrzeugs vermieden werden können.

Das vorgeschlagene Verfahren kann insbesondere vorteilhaft ohne Kalibrierung, d. h. ohne Vergleich zweier Messungen zu verschiedenen Zeitpunkten, durchgeführt werden und eignet sich daher vorteilhafterweise auch für den Einsatz bei fahrendem Kraftfahrzeug.

Mit dem vorgeschlagenen Verfahren kann vorteilhafterweise durch Permutation der Paare aus einem ersten, sendenden und einem zweiten, empfangenden Ultraschall-Sendeempfänger bereits mit einer geringen Anzahl von Ultraschall-Sendeempfängern eine große Anzahl Messpunkte gewonnen und eine große Bodenfläche unter dem Unterboden überwacht werden.

Insbesondere skaliert durch das vorgeschlagene Permutieren der Paare eine Anzahl erhaltbarer Messpunkte vorteilhaft quadratisch, insbesondere mit N*(N-1), wobei N die Anzahl der Ultraschall-Sendeempfänger ist.

Unter einer Bodenfreiheit ist insbesondere eine lichte Weite in vertikaler Richtung, bezogen auf das Kraftfahrzeug, zwischen einem Punkt auf einem Untergrund, auf welchem das Kraftfahrzeug steht oder fährt (einem Punkt des bestimmten Bodenprofils), und einem Punkt am Unterboden des Kraftfahrzeugs zu verstehen.

Unter einem Sendesignal und unter einem Empfangssignal ist jeweils insbesondere ein Ultraschallsignal zu verstehen, das sich durch eine Ultraschallschwingung mit einer oder mehreren Grundfrequenzen und einer Hüllkurve beschreiben lässt. Das Sendesignal und das Empfangssignal können vorzugsweise jeweils ein zeitlich begrenzter Ultraschallimpuls sein.

Insbesondere erfolgt das Ansteuern zum Empfangen des Empfangssignals in Schritt b) gleichzeitig mit oder zeitlich nach dem Ansteuern zum Aussenden des Sendesignals in Schritt a).

Der erste und der zweite Ultraschall-Sendeempfänger können beliebig unter den Ultraschall-Sendeempfängern ausgewählt werden, jedoch ist in jedem einzelnen Durchlauf von Schritt a) der erste Ultraschall-Sendeempfänger von dem zweiten Ultraschall-Sendeempfänger verschieden.

Ein jeweiliges Ansteuern kann beispielsweise durch Übertragen von Signalen an einen und Empfangen von Signalen von einem auf einer Leiterplatte des Ultraschall-Sendeempfängers montierten applikationsspezifischen Steuerkreis (ASIC) erfolgen, welcher das Senden und Empfangen von Ultraschall-Signalen durch den Ultraschall-Sendeempfänger steuert.

Unter einem Echosignal, welches eine Reflexion des in Schritt a) gesendeten Sendesignals entspricht, ist vorzugsweise beispielsweise zu verstehen: ein Echosignal mit einer Frequenz, welche der Frequenz des Sendesignals entspricht; ein Echosignal mit einer Amplitude, insbesondere einer Amplitude der Hüllkurve, die einen vorgegebenen Schwellwert übersteigt, der unter Berücksichtigung einer Amplitude des Sendesignals gewählt ist; ein Echosignal mit einer Signalform bzw. Hüllkurve, die der Signalform des Sendesignals entspricht, und dergleichen. Unter "entsprechen" ist hierbei eine Identitätsbeziehung oder eine Ähnlichkeitsbeziehung zu verstehen. Eine Ähnlichkeitsbeziehung berücksichtigt vorzugsweise physikalische Gegebenheiten, wie Veränderungen der Signalform, der Amplitude und dergleichen des Sendesignals auf seinem Weg von dem ersten zum zweiten Ultraschall-Sendeempfänger.

Ein jeweiliger der Ultraschall-Sendeempfänger kann insbesondere dazu eingerichtet sein, ein Sendesignal in einer Richtung diagonal nach unten in Richtung eines Bodens unter dem Kraftfahrzeug auszusenden und ein Echosignal aus einer oder mehreren Richtungen diagonal von unten aus Richtung eines Bodens unter dem Kraftfahrzeug zu empfangen.

Die mehreren zueinander beabstandeten Ultraschall-Sendeempfänger sind insbesondere derart angeordnet, dass sie einander zugewandt sind. "Einander zugewandt" bedeutet hierbei insbesondere, dass, insbesondere bei Annahme eines ebenen Bodens unter dem Kraftfahrzeug, eine von einem Ultraschall-Sendeempfänger ausgesendete Sendesignalkeule in Richtung des Bodens ausgesendet und an diesem dergestalt reflektiert wird, dass die reflektierte Signalkeule mindestens eine, vorzugsweise mehrere, besonders vorzugsweise alle der anderen an dem Unterboden beabstandet zueinander angeordneten Ultraschall-Sendeempfänger erreicht. Unter einer Signalkeule ist hierbei insbesondere ein Signal zu verstehen, das mit einem gewissen Öffnungswinkel ausgesendet wird.

Das einmalige Ausführen der Schritte a) und b) kann als Durchführen einer Messung aufgeführt werden, bei der ein Empfangssignal gemessen wird. Ergebnis der Messung (ein Messpunkt) kann beispielsweise eine Laufzeitdifferenz zwischen Aussenden des Sendesignals und Empfangen des Empfangssignals sein.

Unter "Wiederholen" ist insbesondere das mehrfache Ausführen der Schritte a) und b) gleichzeitig und/oder in zeitlicher Abfolge zu verstehen.

Für die Auslegung des Merkmals "verschiedene Paare" in Schritt c) gelten ein erstes Paar aus zwei Ultraschall-Sendeempfänger und ein zweites Paar aus Ultraschall-Sendeempfänger dann als verschieden, wenn eines der Paare mindestens einen Ultraschall-Sendeempfänger enthält, der nicht in dem anderen Paar enthalten ist. Dagegen gelten bei der Auslegung des Merkmals "verschiedene Paare" in Schritt c) zwei Paare, bei denen lediglich der erste und der zweite Ultraschall-Sendeempfänger miteinander vertauscht sind, nicht als verschieden. Gleichwohl ist denkbar, dass zwei Messungen mit zwei derartigen nicht als "verschieden" geltenden Paaren mit lediglich vertauschten Ultraschall-Sendeempfängern ausgeführt werden, um die Anzahl der Messungen weiter zu erhöhen. Mindestens sind jedoch in Schritt c) nach Abschluss aller Wiederholungen mehrere Echosignale von mehreren als verschieden geltenden Paaren empfangen worden.

Unter "Bestimmen" ist in der vorliegenden Anmeldung insbesondere rechnerisches Bestimmen mittels einer computerisierten Vorrichtung zu verstehen.

Das "Profil eines Bodens" kann beispielsweise als eine Menge von Punkten verstanden werden, die als Punkte auf dem Boden bestimmt worden sind und eine Profillinie oder eine Profilfläche bilden. Beispielsweise kann das Profil eine Datenmenge sein, bei der jeder Koordinate, die eine Position auf einer horizontalen Linie oder Ebene unter dem Kraftfahrzeug angibt, eine Bodenhöheninformation zugeordnet ist. Das "Profil eines Bodens" kann auch eine Vektordarstellung oder jede andere geeignete computer-verarbeitbare Darstellung einer Profillinie (Linie bzw. zweidimensionale Darstellung eines Profils) oder einer Profilfläche (nicht notwendigerweise ebene Fläche bzw. dreidimensionale Darstellung eines Profils) sein. Ein Profil kann somit beispielsweise in einem zweidimensionalen Fall eine datenmäßige Darstellung einer Linie sein, die einen Verlauf einer Bodenhöhe entlang einer Längsrichtung (Fahrtrichtung) unter dem Kraftfahrzeug angibt, und in einem dreidimensionalen Fall eine datenmäßige Darstellung einer Fläche sein, die einen Verlauf der Bodenhöhe über einer gedachten horizontalen Fläche unter dem Unterboden des Kraftfahrzeugs angibt.

Das Bestimmen des Profils des Bodens anhand der empfangenen Echosignale kann insbesondere anhand der Signallaufzeiten der empfangenen Echosignale sowie anhand der Einbauorte der jeweiligen Ultraschall-Sendeempfänger, mit denen das jeweilige Echosignale empfangen und das jeweils zugehörige Sendesignal gesendet wurde, erfolgen.

Das "Unterbodenprofil des Kraftfahrzeugs" kann beispielsweise eine Menge von Punkten auf dem Unterboden des Kraftfahrzeugs sein. Das "Unterbodenprofil" kann auch eine Vektordarstellung oder jede andere geeignete computer-verarbeitbare Darstellung einer Profillinie oder einer Profilfläche des Unterbodens des Kraftfahrzeugs sein. Das Unterbodenprofil des Kraftfahrzeugs kann vorbekannt sein und kann beispielsweise in einer Steuervorrichtung des Kraftfahrzeugs eingespeichert sein.

Unter einer minimalen Bodenfreiheit ist insbesondere die kleinste Bodenfreiheit entlang des gesamten Unterbodenprofils zu verstehen.

Gemäß einer Ausführungsform werden in Schritt c) mindestens drei verschiedene Paare ausgewählt, wobei mindestens ein Ultraschall-Sendeempfänger der mindestens drei verschiedenen Paare nicht entlang einer geraden Linie mit allen anderen der mehreren Ultraschall-Sendeempfängern der mindestens drei verschiedenen Paare an dem Unterboden des Kraftfahrzeugs angeordnet ist.

Demgemäß ist es vorteilhafterweise möglich, nicht nur eine Profillinie, sondern eine Profilfläche des Bodens zu bestimmen.

Gemäß einer weiteren Ausführungsform wird in Schritt d) für jedes Echosignal anhand einer Signallaufzeit zwischen dem Senden des zugehörigen Sendesignals und dem Empfangen des Echosignals sowie anhand von Einbaupositionen des ersten und des zweiten Ultraschall-Sendeempfängers, mit denen das Sendesignal gesendet und das Echosignal empfangen wurde, eine Ellipse oder ein Ellipsoid mit möglichen Reflexionspunkten bestimmt, an denen das Sendesignal reflektiert worden sein kann; und das Profil des Bodens wird durch Anpassen einer Fläche an die bestimmten Ellipsen oder Ellipsoide bestimmt.

Demgemäß kann vorteilhafterweise eine besonders gute Annäherung des Bodenprofils an den tatsächlichen Verlauf des Bodens erzielt werden.

Unter einer "Ellipse" oder einm "Ellipsoid" ist vorliegend insbesondere eine Anzahl von Parametern zu verstehen, die die Ellipse oder das Ellipsoid eindeutig beschreiben. Ein Beispiel für solche Parameter sind Koordinaten der insbesondere vorbekannten Einbauposition des ersten Ultraschall-Sendeempfängers, Koordinaten der insbesondere vorbekannten Einbauposition des zweiten Ultraschall-Sendeempfängers und eine Wegstrecke, die das Signal zurückgelegt hat, wobei die Wegstrecke anhand der Signallaufzeit und der Schallgeschwindigkeit bestimmt wird.

Die Ellipse oder das Ellipsoid mit möglichen Reflexionspunkten, an denen das Sendesignal reflektiert worden sein kann, ist hierbei insbesondere eine Ellipse oder ein Ellipsoid, deren/dessen Brennpunkte die Einbaupositionen des ersten und zweiten Ultraschall-Sendeempfängers sind, wobei für jeden Punkt des Ellipsoids eine Summe aus einem Abstand des Punkts zu dem ersten Brennpunkt und einem Abstand des Punkts zu dem zweiten Brennpunkt gleich der vorstehend erwähnten Wegstrecke ist, die das Signal zurückgelegt hat.

Die Fläche, die an die bestimmen Ellipsen oder Ellipsoide angepasst wird, kann insbesondere eine Tangentialfläche an die bestimmten Ellipsen oder Ellipsoiden sein. Insbesondere kann die Tangentialfläche von unten - bezogen auf das Kraftfahrzeug - an die bestimmten Ellipsen oder Ellipsoide angepasst werden.

Alternativ hierzu kann die Fläche auch eine Fläche sein, die alle untersten Punkte aller Schnittlinien enthält, an denen sich je zwei der bestimmten Ellipsen oder Ellipsoiden schneiden.

Als Verfahren zum Anpassen kann ein geeignetes analytisches oder numerisches Verfahren verwendet werden.

Gemäß einer weiteren Ausführungsform erfolgt in Schritt d) ferner ein zeitliches und/oder räumliches Mitteln der bestimmten Ellipsen oder Ellipsoide.

Demgemäß können Effekte durch Wind oder Fahrtwind unter dem Unterboden vorteilhaft herausgemittelt werden.

Unter einem zeitlichen Mitteln ist beispielsweise zu verstehen, dass jeweils Messungen mit einem selben Paar aus erstem und zweitem Ultraschall-Sendeempfänger in kurzem zeitlichem Abstand wiederholt werden und ein Mittelwert aus den gemessenen Signallaufzeiten bzw. Wegstrecken gebildet wird, auf dessen Basis beispielsweise eine Ellipse oder ein Ellipsoid mit möglichen Reflexionspunkten bestimmt wird.

Unter einem räumlichen Mitteln ist beispielsweise zu verstehen, dass aus räumlich benachbarten Ellipsen oder Ellipsoiden mittlere Brennpunkte und eine mittlere Wegstrecke bestimmt und auf diese Weise eine gemittelte Ellipse oder ein gemitteltes Ellipsoid bestimmt wird.

Gemäß einer weiteren Ausführungsform umfasst das Verfahren ferner den Schritt f): Auslösen eines den Betrieb des Kraftfahrzeugs betreffenden Vorgangs in Abhängigkeit von der bestimmten minimalen Bodenfreiheit.

Demgemäß kann der Betrieb des Kraftfahrzeugs vorteilhaft geeignet beeinflusst werden, um eine Beschädigung des Kraftfahrzeugs durch eine zu geringe Bodenfreiheit wirksam zu verhindern.

Gemäß einer weiteren Ausführungsform umfasst Schritt f) einen oder mehrere der folgenden Schritte: Ausgeben einer Warnung an einen Fahrer des Kraftfahrzeugs, wenn die minimale Bodenfreiheit einen Schwellwert unterschreitet, und/oder Anzeigen der bestimmten minimalen Bodenfreiheit mittels einer Anzeigevorrichtung, und/oder Anzeigen einer grafischen Darstellung des bestimmten Profils der Bodenfläche unter dem Kraftfahrzeug mittels einer Anzeigevorrichtung und/oder Veranlassen eines automatischen Bremsens und/oder Stoppens des Kraftfahrzeugs, wenn die minimale Bodenfreiheit (9) einen Schwellwert unterschreitet, und/oder Anheben des Fahrzeugs mittels eines höhenverstellbaren Fahrwerks, wenn die minimale Bodenfreiheit einen Schwellwert unterschreitet.

Demgemäß kann der Fahrer oder eine automatische Vorrichtung das Kraftfahrzeug bremsen und/oder stoppen, wenn sich eine Bodenhöhe um mehr als den Schwellwert an den Unterboden des Kraftfahrzeugs annähert. Demgemäß kann vorteilhaft eine Beschädigung des Kraftfahrzeugs, insbesondere bei Offroad-Fahrten, verhindert werden.

Gemäß einer weiteren Ausführungsform wird der Schwellwert in Abhängigkeit von einer Fahrgeschwindigkeit des Kraftfahrzeugs gewählt.

Demgemäß kann vorteilhafterweise bei schneller Fahrt des Kraftfahrzeugs ein höherer Schwellwert gewählt werden, da bei schnellerem Fahren mit schnellerer Änderung der Bodenhöhe zu rechnen ist und ein Bremsweg verlängert ist, und bei langsamer Fahrt des Kraftfahrzeugs kann ein geringerer Schwellwert gewählt werden, um bei hinreichender langsamer Fahrt auch ein Herantasten an schwierige Bodensituationen zu ermöglichen.

Die Fahrgeschwindigkeit des Kraftfahrzeugs kann von einer Tachometervorrichtung oder dergleichen bezogen werden.

Gemäß einer weiteren Ausführungsform wird das Verfahren durchgeführt, während das Kraftfahrzeug fährt.

Das Durchführen der vorgeschlagenen Bodenfreiheitsüberwachung ist vorteilhafterweise auch bei fahrendem Kraftfahrzeug möglich, da das vorgeschlagene Verfahren vorteilhafterweise keine Kalibrierung, keinen Vergleich mit Referenzmessungen und dergleichen erfordert.

Gemäß einer weiteren Ausführungsform wird in Schritt d) das bestimmte Profil des Bodens in einer Fahrtrichtung des Kraftfahrzeugs extrapoliert, und in Schritt e) wird das extrapolierte Profil mit einem in der Fahrtrichtung des Kraftfahrzeugs extrapolierten Unterbodenprofil des Kraftfahrzeugs verglichen, um eine extrapolierte minimale Bodenfreiheit als die minimale Bodenfreiheit zu bestimmen.

Demgemäß kann eine zu niedrige Bodenfreiheit vorteilhafter antizipiert werden, bevor das Kraftfahrzeug den Fahrbahnabschnitt mit der zu niedrigen Bodenfreiheit erreicht hat, und Beschädigungen des Kraftfahrzeugs können noch zuverlässiger vermieden werden.

Das Extrapolieren kann beispielsweise durch Bestimmen eines mittleren Gradienten in der Fahrtrichtung und Verlängern des betreffenden Profils gemäß dem bestimmten Gradienten erfolgen.

Die Fahrtrichtung kann beispielsweise durch eine Längsrichtung bzw. Front-Heck-Richtung des Kraftfahrzeugs festgelegt werden. Vorzugsweise können außerdem eine Lenkerstellung oder eine Stellung lenkbarer Räder des Kraftfahrzeugs und/oder eine Fahrtgeschwindigkeit in die Bestimmung der Fahrtrichtung einfließen.

Gemäß einer weiteren Ausführungsform erfolgt das Wiederholen in Schritt c) dergestalt, dass in Schritt a) ein erster Ultraschall-Sendeempfänger ausgewählt wird und Schritt b) zeitgleich mit mehreren verschiedenen zweiten Ultraschall-Sendeempfängern durchgeführt wird.

Auf diese Weise können vorteilhafterweise Messungen mit mehreren Paaren von Ultraschall-Sendeempfängern, nämlich allen denjenigen Paaren, die den ausgewählten ersten Ultraschall-Sendeempfänger enthalten, zeitgleich ausgeführt werden, und somit können in kürzerer Zeit vorteilhafterweise mehr Messungen durchgeführt werden.

Gemäß einer weiteren Ausführungsform erfolgt das Wiederholen in Schritt c) dergestalt, dass zeitgleich mehrere Schritte a) mit mehreren verschiedenen ersten Ultraschall-Sendeempfängern durchgeführt werden, die derart angesteuert werden, dass jeder der ersten Ultraschall-Sendeempfänger ein Sendesignal mit einer unterschiedlichen Sendesignatur sendet, und in Schritt b) ein Empfangssignalverlauf des zweiten Ultraschall-Sendeempfängers demoduliert wird, um für jedes Paar aus einem der ersten Ultraschall-Sendeempfänger und dem zweiten Ultraschall-Sendeempfängers ein jeweiliges Empfangssignal zu erhalten.

Auf diese Weise können vorteilhafterweise Messungen mit mehreren Paaren von Ultraschall-Sendeempfängern, nämlich allen denjenigen Paaren, die den ausgewählten zweiten Ultraschall-Sendeempfänger enthalten, zeitgleich ausgeführt werden, und somit können in kürzerer Zeit vorteilhafterweise mehr Messungen durchgeführt werden.

Unter einer "Sendesignatur" ist eine Charakteristik eines Sendesignals zu verstehen, die eine Unterscheidung von Sendesignalen erlaubt. Beispielsweise können unterschiedliche Sendesignaturen durch unterschiedliche Sendefrequenzen, Frequenzmodulationen oder Amplitudenmodulationen erzielt werden.

Unter einem "Empfangssignalverlauf" ist insbesondere ein gesamter empfangener Signalverlauf während eines Zeitfensters zu verstehen, beginnend mit dem Ansteuern des jeweiligen zweiten Ultraschall-Sendeempfängers zum Empfangen bis zum Beenden des Ansteuerns zum Empfangen. Das Zeitfenster kann eine zeitliche Länge aufweisen, welche unter Berücksichtigung des Abstands zwischen dem ersten und dem zweiten Ultraschall-Sendeempfänger und einer zu erwartenden Bandbreite von Bodenfreiheiten entsprechend gewählt ist.

Ein solcher Empfangssignalverlauf kann durch Demodulieren in mehrere einzelne Empfangssignalverläufe, einen für jede der Sendefrequenzen, aufgeteilt werden. In den einzelnen Empfangssignalverläufen kann dann jeweils die Lage (der Zeitpunkt des Eintreffens) eines Echosignals identifiziert werden.

Es sei angemerkt, dass die vorliegende und die zuvor genannte Ausführungsform besonders vorteilhaft kombiniert werden können und somit zeitgleich mit allen Ultraschall-Sendeempfängern gleichzeitig gesendet und empfangen werden kann. Im Speziellen kann in diesem Fall ein jeweiliger Ultraschall-Sendeempfänger, der als erster Ultraschall-Sendeempfänger ausgewählt wurde und ein Sendesignal ausgesendet hat, unmittelbar nach Aussenden des Sendesignals in einen Empfangsmodus umgeschaltet werden und als zweiter Ultraschall-Sendeempfänger ausgewählt werden, der die von den übrigen Ultraschall-Sendeempfängern ausgesandten Sendesignale als reflektierte Empfangssignale empfängt. Demgemäß kann vorteilhafterweise in kürzester Zeit eine maximale Anzahl von Messungen durchgeführt werden.

Gemäß einer weiteren Ausführungsform wird in Schritt b) in einem Empfangssignalverlauf des zweiten Ultraschall-Sendeempfängers ein Echosignal, welches zeitlich als erstes nach einem Zeitpunkt des Sendens des Sendesignals empfangen wird, als das empfangene Echosignal identifiziert, das dem in Schritt a) gesendeten Sendesignal entspricht.

Demgemäß können Echosignale, die auf Mehrfachreflexionen zurückgehen und das Messergebnis verfälschen würden, vorteilhafterweise ignoriert werden, und die Echosignale, die auf eine einfache Reflexion zurückgehen, können berücksichtigt werden.

Das heißt, der jeweils Empfangssignalverlauf kann insbesondere mehrere Echosignale umfassen. Insbesondere ist denkbar, dass das Sendesignal entlang mehr als eines Weges mit unterschiedlichen Signallaufzeiten zu dem zweiten Ultraschall-Sendeempfänger reflektiert wird und demgemäß der Empfangssignalverlauf mehr als ein Echosignal zu unterschiedlichen Zeiten umfasst. Die unterschiedlichen Signallaufzeiten können sich insbesondere durch Mehrfachreflexionen ergeben. Eine Mehrfachreflexion entsteht beispielsweise, wenn ein Sendesignal zunächst am Boden, sodann am Unterboden des Kraftfahrzeugs, sodann neuerlich erneut am Boden reflektiert wird, bevor es als Echosignal den zweiten Ultraschall-Sendeempfänger erreicht.

Gemäß einem weiteren Aspekt wird ein Computerprogrammprodukt vorgeschlagen, umfassend Befehle, die bei der Ausführung durch eine mit den mehreren Ultraschall-Sendeempfängern kommunikativ verbundene Computervorrichtung diese dazu veranlassen, das Verfahren wie vorstehend vorgeschlagen auszuführen.

Die Computervorrichtung kann beispielsweise ein elektronisches Steuergerät (ECU, Electronic Control Unit) des Kraftfahrzeugs sein.

Gemäß einem weiteren Aspekt wird eine Vorrichtung zur Überwachung einer Bodenfreiheit unter einem Kraftfahrzeug vorgeschlagen. An dem Unterboden des Kraftfahrzeugs sind mehrere zueinander beabstandete Ultraschall-Sendeempfänger angeordnet. Die Vorrichtung ist kommunikativ mit den mehreren Ultraschall-Sendeempfängern verbunden und dazu eingerichtet, das vorgeschlagene Verfahren durchzuführen.

Unter "kommunikativ verbunden" ist jede Art von Verbindung zu verstehen, die die Übertragung von Ansteuersignalen und Antwortsignalen in Reaktion auf die Ansteuersignale ermöglicht, beispielsweise eine Drahtverbindung, eine drahtlose Verbindung, und dergleichen.

Ferner wird ein Kraftfahrzeug vorgeschlagen, an dessen Unterboden mehrere zueinander beabstandete Ultraschall-Sendeempfänger angeordnet sind, und das eine Vorrichtung wie vorstehend vorgeschlagen aufweist.

Die für das vorgeschlagene Verfahren beschriebenen Merkmale, Vorteile und Ausführungsformen gelten entsprechend auch für das vorgeschlagene Kraftfahrzeug, die vorgeschlagene Vorrichtung und das vorgeschlagene Computerprogrammprodukt.

Weitere mögliche Implementierungen der Erfindung umfassen auch nicht explizit genannte Kombinationen von zuvor oder im Folgenden bezüglich der Ausführungsbeispiele beschriebenen Merkmalen oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsbeispielen unter Bezugnahme auf die beigefügten Figuren näher erläutert.
- Fig. 1: zeigt eine schematische Darstellung eines Kraftfahrzeugs gemäß einem Ausführungsbeispiel;
- Fig. 2: zeigt ein Flussdiagramm, das ein Verfahren gemäß einem Ausführungsbeispiel veranschaulicht;
- Fig. 3: zeigt eine schematische Darstellung zur Veranschaulichung des Verfahrens gemäß einem Ausführungsbeispiel bei einem ebenen Boden unter dem Kraftfahrzeug;
- Fig. 4: zeigt eine schematische Darstellung zur Veranschaulichung des Verfahrens gemäß einem Ausführungsbeispiel bei einem unebenen Boden unter dem Kraftfahrzeug; und
- Fig. 5: zeigt eine schematische Ansicht eines Unterbodens eines Kraftfahrzeugs gemäß einem Ausführungsbeispiel.

In den Figuren sind gleiche oder funktionsgleiche Elemente mit denselben Bezugszeichen versehen worden, sofern nichts anderes angegeben ist.

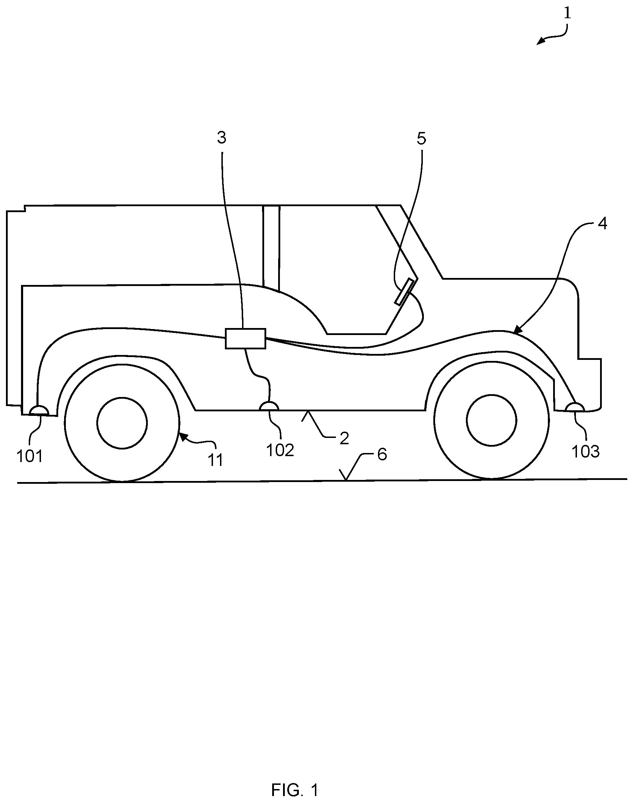

Fig. 1 zeigt eine schematische Darstellung eines Kraftfahrzeugs 1 gemäß einem Ausführungsbeispiel in einer Seitenansicht. In den nachstehend beschriebenen Ausführungsbeispielen ist das Kraftfahrzeug 1 ein Geländefahrzeug oder Offroad-Fahrzeug. Es besteht jedoch keine Einschränkung diesbezüglich. Es sei ferner angemerkt, dass in einem Fall, in dem das vorgeschlagene Verfahren ausgeführt wird, während das Geländefahrzeug 1 fährt, eine Fahrtrichtung F des Geländefahrzeugs 1 in den Fig. 1 bis Fig. 4 eine Richtung nach rechts in der jeweiligen Figur ist.

Das Geländefahrzeug 1 weist an einem Unterboden 2 mehrere zueinander beabstandet angeordnete Ultraschall-Sendeempfänger 101, 102, 103 auf. Die Ultraschall-Sendeempfänger sind vorzugsweise derart angeordnet und ausgerichtet, dass jeder der Ultraschall-Sendeempfänger 101, 102, 103 eine Signalkeule aussenden kann, die, wenn sie an einem Boden (in Fig. 1 nicht gezeigt) unter dem Geländefahrzeug 1 reflektiert wird, jeweils ein Anteil der Signalkeule in Richtung eines oder mehrerer und besonders bevorzugt aller anderer der Ultraschall-Sendeempfänger 101, 102, 103 reflektiert wird.

Vorzugsweise können die Ultraschall-Sendeempfänger 101, 102, 103 einander zugewandt sein. Das heißt, eine von dem Ultraschallsendeempfänger 101 ausgesendete Signalkeule kann diagonal nach rechts unten (bezogen auf Fig. 1, d. h. diagonal in Fahrtrichtung und nach unten) verlaufen. Eine von dem Ultraschallsendeempfänger 102 ausgesendete Signalkeule kann einen Anteil aufweisen, der diagonal nach links unten verläuft, und einen weiteren Anteil, der diagonal nach rechts unten verläuft. Eine von dem Ultraschallsendeempfänger 103 ausgesendete Signalkeule kann diagonal nach links unten verlaufen. Es können aber auch alle ausgesendeten Signalkeulen sowohl einen diagonal nach rechts unten verlaufenden Anteil als auch einen diagonal nach links unten verlaufenden Anteil aufweisen.

Das Geländefahrzeug 1 weist außerdem eine Steuervorrichtung (ECU) 3 auf, die, vorzugsweise über Leitungsverbindungen 4 eines Kabelbaums des Geländefahrzeugs 1, mit den mehreren Ultraschall-Sendeempfänger 101, 102, 103 kommunikativ verbunden ist.

Die Steuervorrichtung 3 ist dazu eingerichtet, das nachstehend beschriebene vorgeschlagene Verfahren zum Überwachen einer Bodenfreiheit durchzuführen, indem sie mit den mehreren Ultraschall-Sendeempfängern 101, 102, 103 kommuniziert und diese zum Aussenden und Empfangen von Ultraschallsignalen ansteuert. Die Steuervorrichtung 3 kann hierzu eine hart verdrahtete Schaltung umfassen, oder sie kann programmierbar sein und ein Computerprogrammprodukt mit Anweisungen ausführen, die die Steuervorrichtung 3 dazu veranlassen, das vorgeschlagene Verfahren auszuführen. Das Computerprogrammprodukt kann in einem lösch- und wiederbeschreibbaren Nurlesespeicher (EEPROM) der Steuereinrichtung hinterlegt sein oder das Computerprogrammprodukt kann von der Steuervorrichtung beim Starten des Geländefahrzeugs 1 oder dergleichen über ein fahrzeuginternes Netzwerk von einer dauerhaften Speichervorrichtung des Geländefahrzeugs 1 und/oder aus einem Weitbereichsnetzwerk wie dem Internet geladen werden.

Das Geländefahrzeug 1 weist ferner eine Anzeigevorrichtung 5, wie beispielsweise ein Instrument oder ein Display in einem Armaturenbrett oder dergleichen auf. Auch die Anzeigevorrichtung 5 ist mit der Steuervorrichtung 3 kommunikativ verbunden.

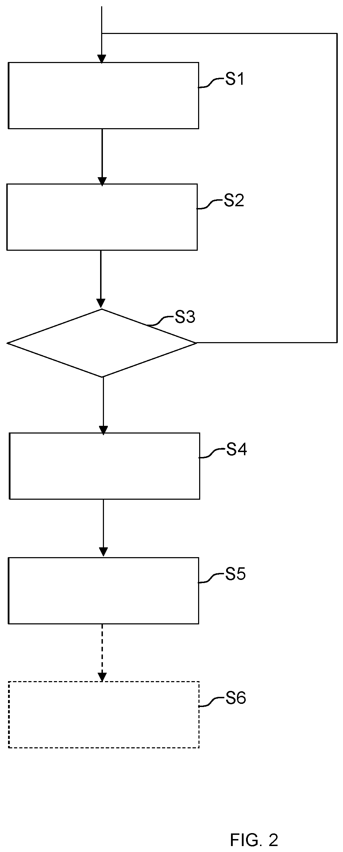

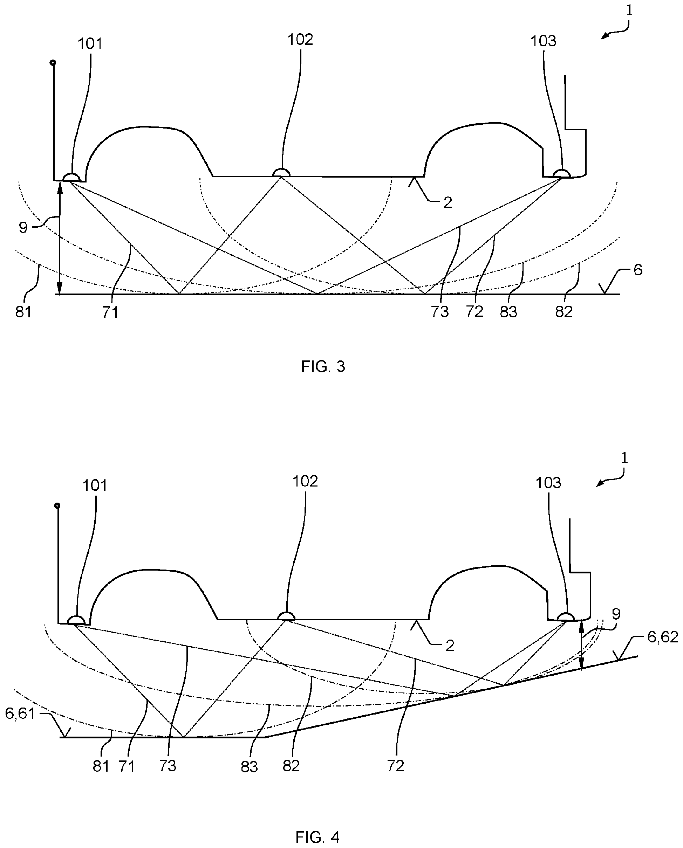

Im Folgenden wird anhand der Fig. 1 bis 4 ein Verfahren zum Überwachen einer Bodenfreiheit unter einem Kraftfahrzeug gemäß einem ersten Ausführungsbeispiel beschreiben. Hierbei zeigt Fig. 2 ein Flussdiagramm, das das Verfahren gemäß dem Ausführungsbeispiel veranschaulicht; Fig. 3 zeigt eine schematische Darstellung eines unteren Abschnitts einer Karosserie des Geländefahrzeugs 1 zur Veranschaulichung des Verfahrens bei einem ebenen Boden 6 unter dem Geländefahrzeug 1, und Fig. 4 zeigt eine schematische Darstellung zur Veranschaulichung des Verfahrens gemäß einem Ausführungsbeispiel bei einem unebenen Boden 6 unter dem Geländefahrzeug 1.

Es sei angemerkt, dass ein Abstand zwischen dem Unterboden 2 der Karosserie des Geländefahrzeugs 1 und dem Boden 6 unter dem Geländefahrzeug 1 in Fig. 3 und Fig. 4 der besseren Veranschaulichung des vorgeschlagenen Verfahrens wegen nicht maßstäblich, sondern übertrieben groß dargestellt ist.

In Schritt S1 wird der Ultraschall-Sendeempfänger 101 als ein erster Ultraschall-Sendeempfänger ausgewählt und dergestalt angesteuert, dass der Ultraschall-Sendeempfänger 101 ein Sendesignal im Allgemeinen nach unten in Bezug auf das Kraftfahrzeug 1 aussendet. Das Sendesignal weist vorzugsweise eine breite Keule auf, von der mindestens ein Anteil diagonal nach rechts unten in Fig. 3 verläuft. In Fig. 3 ist mit gestrichelten Linien lediglich der Ausbreitungsweg 71 desjenigen Anteils der Keule des Sendesignals des ersten Ultraschall-Sendeempfängers 101 dargestellt, der den Ultraschall-Sendeempfänger 102 erreicht.

In Schritt S2, welcher vorzugsweise zeitgleich mit Schritt S2, alternativ dazu rechtzeitig, bevor das in Schritt S1 ausgesendete Sendesignal den Ultraschall-Sendeempfänger 102 erreichen kann, ausgeführt wird, wird der Ultraschall-Sendeempfänger 102 als ein zweiter Ultraschall-Sendeempfänger ausgewählt und dergestalt angesteuert, dass der Ultraschall-Sendeempfänger 102 das Sendesignal, das (den Anteil der Keule des Sendesignals, der) sich entlang des Ausbreitungswegs 71 ausgebreitet hat und dabei an dem Boden 6 unter dem Geländefahrzeug 1 reflektiert worden ist, als ein Empfangssignal empfängt.

Vom Beginn des Ansteuerns zum Empfangen bis zum Ende des Ansteuerns zum Empfangen liefert der Ultraschall-Sendeempfänger 102 einen Empfangssignalverlauf, der von der Steuervorrichtung 3 ausgewertet werden kann. Zum Zeitpunkt des Durchführens des Schritts S2 kann eine solche Auswertung sofort erfolgen, oder der Empfangssignalverlauf kann aufgezeichnet werden und später im Rahmen des Schritts S4 ausgewertet. Der Empfangssignalverlauf kann beispielsweise ein Verlauf eines Spannungssignals sein, das von einem an eine Ultraschallmembran angebrachten Piezoelement oder dergleichen des Ultraschall-Sendeempfängers 102 geliefert wird, oder der Empfangssignalverlauf kann ein Verlauf eines digitalen Signals sein, das von einem elektronischen Bauelement des Ultraschall-Sendeempfängers 102 geliefert wird und indikativ für das Spannungssignal des Piezoelement ist.

Bei der Auswertung kann vorzugsweise ein Abschnitt des Empfangssignalverlaufs identifiziert werden, der indikativ für das Empfangssignal (empfangenes Ultraschallsignal) ist, beispielsweise ein Peak innerhalb des Empfangssignalverlauf. Der solchermaßen identifizierte Abschnitt des Empfangssignalverlaufs, der das Ultraschall-Empfangssignals angibt, kann vorliegend der Einfachheit halber ebenfalls als "das Empfangssignal" bezeichnet werden.

Sind mehrere Peaks innerhalb des Empfangssignalverlaufs enthalten, kann gemäß einer vorteilhaften Weiterbildung beispielsweise der zeitlich erste Peak als das Empfangssignal identifiziert werden. Vorzugsweise kann außerdem ein Kriterium für die Form und/oder die Höhe des Peaks angewendet werden und der zeitlich erste Peak als das Empfangssignal identifiziert werden, der dem festgelegten Kriterium genügt. Auf diese Weise können vorteilhafterweise Peaks, die von Mehrfachreflexionen (Boden 6 - Unterboden 2 - Boden 6) herrühren, unberücksichtigt bleiben und somit verhindert werden, dass Mehrfachreflexionen das Messergebnis verfälschen.

Anstatt den gesamten Empfangssignalverlauf aufzuzeichnen, kann beispielsweise der Empfangssignalverlauf auch instantan oder live/online ausgewertet werden, und es kann ein Parameter aufgezeichnet werden, der das Empfangssignal beschreibt, beispielsweise ein Zeitpunkt, an dem der Peak im Empfangssignalverlauf auftritt, der den Empfang des Empfangssignal angibt.

Das beschriebene einmalige Ausführen von Schritt S1 und Schritt S2 mit einem Paar Ultraschall-Sendeempfänger 101, 102 kann auch als eine Messung aufgefasst werden, die mit dem Paar Ultraschall-Sendeempfänger 101, 102 durchgeführt wird und bei der ein Messpunkt (vorliegend das Empfangssignal oder eine Angabe über das Empfangssignal, wie den Zeitpunkt des Auftretens des Peaks) gewonnen wird.

Sodann wird in Schritt S3 veranlasst, dass die Schritte S1 und S2 mit einem oder mehreren oder vorzugsweise allen möglichen voneinander verschiedenen Permutationen an Paaren aus den Ultraschall-Sendeempfängern 101, 102, 103 durchgeführt werden und auf diese Weise weitere Messpunkte gewonnen werden.

In Schritt S4 wird aus den Messpunkten, d. h. anhand der empfangenen Echosignale, ein Profil des Bodens 6 bestimmt. Es wird nun ein bevorzugtes Verfahren zur Implementation von Schritt S4 beschrieben.

Ein erster Messpunkt umfasst insbesondere Daten über einen Zeitpunkt des Eintreffens des von dem Ultraschall-Sendeempfänger 101 ausgesendeten Sendesignals, das entlang des Ausbreitungswegs 71 verläuft, am Boden 6 reflektiert und vom Ultraschall-Sendeempfänger 102 empfangen wird. Anhand einer Signallaufzeit zwischen Senden des Sendesignals und Empfang des Echosignals wird durch Multiplikation mit der Schallgeschwindigkeit in Luft eine Weglänge berechnet, die das Ultraschallsignal vom Ultraschall-Sendeempfänger 101 entlang des Ausbreitungswegs 71 bis zum Ultraschall-Sendeempfänger 102 zurückgelegt hat. Anhand der Weglänge wird eine Ellipse 81 bestimmt, die alle möglichen Reflexionspunkte enthält, an denen das Sendesignal prinzipiell hätte reflektiert werden können, um sich auf einem Weg der berechneten Weglänge vom Ultraschall-Sendempfänger 101 zum Ultraschall-Sendeempfänger 102 auszubreiten. Die Ellipse 81 ist insbesondere eine Ellipse, in deren Brennpunkten sich die Einbauorte des ersten Ultraschall-Sendeempfängers 101 und des zweiten Ultraschall-Sendeempfängers 102 befinden, und die die Menge aller Punkte beschreibt, für die die Summe aus einem Abstand zum ersten Brennpunkt und einem Abstand zum zweiten Brennpunkt gleich der wie vorstehend beschrieben bestimmten Weglänge entlang des Ausbreitungswegs 71 ist.

Auf gleiche Weise werden anhand der Weglänge eines zweiten Ausbreitungswegs 72 eines von dem Ultraschall-Schall-Sendeempfänger 102 ausgesendeten Sendesignals, dessen Reflexion den Ultraschall-Sendeempfänger 103 erreicht, und der Weglänge eines dritten Ausbreitungswegs 73 eines von dem Ultraschall-Sendeempfänger 101 ausgesendeten Sendesignals, dessen Reflexion ebenfalls den Ultraschall-Sendeempfänger 103 erreicht, weitere Ellipsen 82 und 83 bestimmt, auf denen die jeweils möglichen Reflexionspunkte liegen.

Es sei nochmals betont, dass die tatsächlichen Ausbreitungswege 71, 72, 73 der Sendesignale der Steuereinheit (3 in Fig. 1), die das Verfahren ausführt, zu diesem Zeitpunkt unbekannt sind. Bestimmt sind zu diesem Zeitpunkt lediglich die Ellipsen 81, 82 und 83.

In Fig. 3 ist zu sehen, dass bei einem flachen Boden 6 der flache Boden 6 eine Tangentiallinie von unten an die Ellipsen 81, 82, 83 bildet.

In Fig. 4 ist im Vergleich dazu ein Fall dargestellt, bei dem der Boden 6 einen flachen Abschnitt 61 und einen schrägen Abschnitt 62 darstellt. Der Ausbreitungsweg 71 und die zugehörige bestimmte Ellipse 81 im Bereich des flachen Bodenabschnitts 61 sind die gleichen wie in Fig. 3. Dagegen haben sich die Ausbreitungswege 72 und 73 bzw. die aus den entsprechenden Sendesignalen bestimmten Ellipsen 82, 83 im Bereich das schrägen Bodenabschnitts 62 verändert.

Auch in dem in Fig. 4 dargestellten Fall bildet der Boden mit dem flachen Abschnitt 61 und dem schrägen Abschnitt 62 eine Tangentiallinie von unten an die Ellipsen 81, 82 und 83.

Demgemäß wird in Schritt S4 ein Profil des Bodens 6 (ein aus den Messungen rekonstruierter Verlauf des Bodens 6) anhand der Ellipsen 81, 82 und 83 bestimmt. Vorzugsweise kann eine Tangentiallinie von unten an die Ellipsen 81, 82 und 83 angepasst werden. Alternativ hierzu ist es auch möglich, eine Profillinie durch die unteren (tiefer als der Unterboden 2 des Geländefahrzeugs 1 liegenden) Schnittpunkte der Ellipsen 81, 82 und 83 zu legen (anzupassen). Letzteres Verfahren ist weniger genau, jedoch für den Zweck der Bodenfreiheitsbestimmung ebenfalls brauchbar und algorithmisch ggf. mit geringerem Rechenaufwand durchzuführen. Die jeweilige Profillinie kann durch ein geeignetes analytisches oder numerisches Verfahren angepasst werden.

In Schritt S5 wird sodann eine minimale Bodenfreiheit 9 unter dem Kraftfahrzeug 1 bestimmt, indem das in Schritt S4 bestimmte Profil des Bodens 6 mit dem vorbekannten Unterbodenprofil des Unterbodens 2 des Geländefahrzeugs 1 verglichen wird. Die minimale Bodenfreiheit 9 ist dabei der kleinste Abstand zwischen dem Profil des Unterbodens 2 und dem Profil des Bodens 6 entlang des Verlaufs des Unterbodens 2 des Geländefahrzeugs 1.

Auf diese Weise kann vorteilhafterweise die minimale Bodenfreiheit 9 auch bei fahrendem Kraftfahrzeug 1 bestimmt werden, da für die Messung keine Kalibrierung bzw. kein Vergleich mit einer vorherigen Referenzmessung erforderlich ist. Anhand der bekannten minimalen Bodenfreiheit 9 können Schäden am Geländefahrzeug 1 in schwierigem Terrain vermieden werden.

Es sei angemerkt, dass im vorliegenden Ausführungsbeispiel anhand Fig. 3 und 4 des einfacheren Verständnisses halber ein zweidimensionaler Fall beschrieben ist, bei dem die möglichen Reflexionspunkte auf Ellipsen 81-83 liegen, die alle in einer Schnittebene des Geländefahrzeugs 1 angeordnet sind. Die Ultraschall-Sendeempfänger 101-103 sind ebenfalls alle in derselben Schnittebene des Geländefahrzeugs 1 angeordnet. Zum Beispiel kann die Schnittebene mit den Ultraschall-Sendeempfängern 101-103 in einer zur Fahrtrichtung senkrecht verlaufenden Fahrzeugquerrichtung vorzugsweise mittig oder im Wesentlichen mittig zwischen den Rädern 11 des Geländefahrzeugs 1 angeordnet sein. Somit kann eine Profillinie des Bodens 6 unter dem Geländefahrzeug 1 an einer Position mittig zwischen den Rädern erfasst und dort eine minimale Bodenfreiheit bestimmt werden, wo eine Wahrscheinlichkeit, dass Hindernisse auf dem Boden 6 bis in die Nähe des Unterbodens 2 des Kraftfahrzeugs 1 emporragen, am größten ist.

Gemäß einer Weiterbildung kann die Steuereinheit 3 in Schritt S6 einen den Betrieb des Geländefahrzeugs 1 betreffenden Vorgang in Abhängigkeit der minimalen Bodenfreiheit 9 veranlassen. Insbesondere kann die Steuereinheit 3, wenn die minimale Bodenfreiheit 9 einen in Anbetracht der Sicherheit gewählten Schwellwert unterschreitet, mittels der Anzeigevorrichtung 5 oder eines nicht dargestellten Lautsprechers oder dergleichen eine Warnung an den Fahrer des Geländefahrzeugs 1 ausgeben und/oder ein automatisches Bremsen und/oder Stoppen des Geländefahrzeugs 1 einleiten. Demgemäß kann Schaden von dem Geländefahrzeug 1 beim Weiterfahren abgewendet werden. Der Schwellwert kann fest gewählt sein oder abhängig von einer Fahrgeschwindigkeit des Geländefahrzeugs 1, welche die Steuereinheit 3 beispielsweise von einer nicht gezeigten Tachometervorrichtung beziehen kann, gewählt werden, insbesondere bei höheren Fahrgeschwindigkeiten höher als bei niedrigen Fahrgeschwindigkeiten. Alternativ oder zusätzlich hierzu kann beispielsweise auf der Anzeigevorrichtung 5 abhängig oder unabhängig von einem Unterschreiten des Schwellwerts das bestimmte Profil des Bodens 6 grafisch visualisiert werden und so den Fahrer jederzeit beim Fahren auf schwierigem Terrain unterstützen. Falls ein höhenverstellbares Fahrwerk vorhanden ist, kann das Fahrzeugs mittels des höhenverstellbaren Fahrwerks angehoben werden, wenn die minimale Bodenfreiheit (9) einen Schwellwert unterschreitet

Gemäß einer bevorzugten Weiterbildung kann das bestimmte Profil des Bodens 6 in Fahrtrichtung (rechts in Fig. 3 und 4) extrapoliert werden, beispielsweise anhand eines Gradienten in einem in Fahrtrichtung vorderen Abschnitt des Profils des Bodens 6. Das Profil des Unterbodens 2 kann ebenfalls in Fahrtrichtung extrapoliert werden. Die minimale Bodenfreiheit kann dann als der kleinste Abstand zwischen dem extrapolierten Profil des Bodens 6 und dem extrapolierten Profil des Unterbodens 2 ermittelt werden. Somit können vorteilhafterweise auch in Fahrtrichtung F vorausliegende Hindernisse auf dem Boden 6 antizipiert werden.

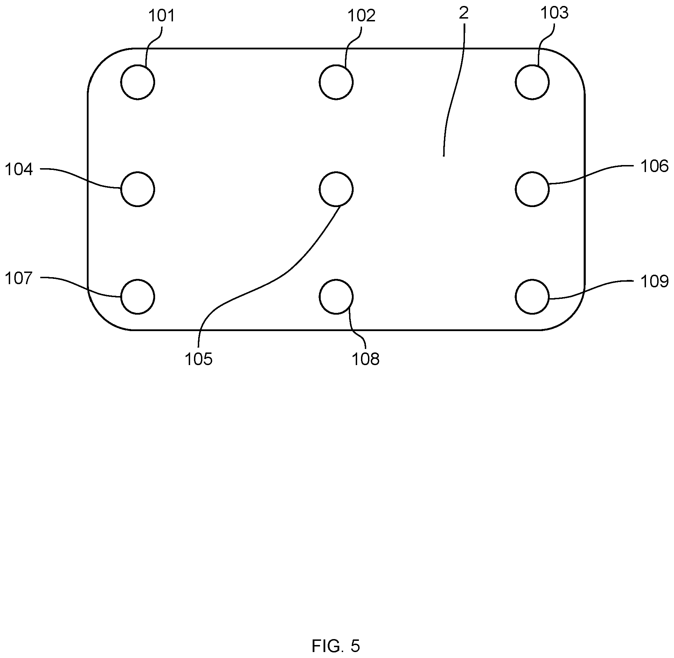

Fig. 5 zeigt eine schematische Ansicht eines Unterbodens 2 eines Geländefahrzeugs 1 gemäß einem zweiten Ausführungsbeispiel. Es wird auf Fig. 1, Fig. 2 und Fig. 5 Bezug genommen.

Gemäß dem zweiten Ausführungsbeispiel sind an dem Unterboden 2 neun Ultraschall-Sendeempfänger 101-109 in einem zweidimensionalen Raster angeordnet, das im Wesentlichen den gesamten Unterboden 2 des Geländefahrzeugs 1 abdeckt. Anders ausgedrückt lassen sich bei der in Fig. 5 gezeigten Anordnung mindestens drei verschiedene Paare aus einem ersten, sendenden und einem zweiten, empfangenden Ultraschall-Sendeempfänger 101-109 derart bilden, dass mindestens ein Ultraschall-Sendeempfänger 101-109 der mindestens drei verschiedenen Paare nicht entlang einer geraden Linie mit allen anderen der mehreren Ultraschall-Sendeempfänger 101-109 der mindestens drei verschiedenen Paare angeordnet ist.

Das Verfahren zum Bestimmen der Bodenfreiheit unter dem Geländefahrzeug 1 kann mit der in Fig. 5 gezeigten zweidimensionalen Anordnung der Ultraschall-Sendeempfänger 101-109 auf gleichartige Weise wie das Verfahren zum Bestimmen der Bodenfreiheit unter dem Geländefahrzeug 1 erfolgen, das für das erste Ausführungsbeispiel beschrieben wurde. Insbesondere werden in den Schritten S1 bis S3 vorzugsweise alle möglichen Permutationen aus verschiedenen Paaren eines ersten und eines zweiten Ultraschall-Sendeempfängers 101-109 gebildet und für jedes dieser Paare eine Messung durchgeführt. Es sei angemerkt, dass, da im zweiten Ausführungsbeispiel neun Ultraschall-Sendeempfänger 101-109 angeordnet sind, die Anzahl dieser Paare zweiundsiebzig beträgt, also zweiundsiebzig verschiedene Messpunkte erhältlich sind.

Im Unterschied zum ersten Ausführungsbeispiel werden jedoch in Schritt S4 statt der Ellipsen (71-73 in Fig. 3 und Fig. 4), auf denen mögliche Reflexionspunkte der Sendesignale angeordnet sind, beim zweiten Ausführungsbeispiel jeweilige dreidimensionale Ellipsoide mit möglichen Reflexionspunkten bestimmt. Das Profil des Bodens 6 wird in Schritt S5 durch Anpassen einer Tangentialfläche von unten an die bestimmten Ellipsoide oder durch Anpassen einer Schnittfläche durch die tiefstliegenden Schnittpunkte der Ellipsoide bestimmt.

Auf diese Weise ist es gemäß dem zweiten Ausführungsbeispiel vorteilhafterweise möglich, ein Profil des Bodens 6 unter dem Geländefahrzeug 1 nicht nur als Profillinie in einer zweidimensionalen Schnittebene durch das Geländefahrzeug 1, sondern als Profilfläche zu gewinnen, welche vorzugsweise den gesamten Bereich zwischen den Rädern 11 des Kraftfahrzeugs 1 oder den ganzen Bereich unter dem Geländefahrzeug 1 abdecken kann.

Die übrigen Vorteile und Merkmale des ersten Ausführungsbeispiels gelten entsprechend auch für das zweite Ausführungsbeispiel.

Gemäß einem dritten Ausführungsbeispiel wird die gleiche Ultraschall-Sendeempfänger-Anordnung wie im zweiten Ausführungsbeispiel verwendet, die in Fig. 5 dargestellt ist. Allerdings erfolgen Messungen hierbei lediglich anhand von Paaren, die entlang der horizontalen Linien 101-102-103, 104-105-106 und 107-108-109, entlang der vertikalen Linien 101-104-107, 102-105-108 und 103-106-109 und entlang der diagonalen Linien 101-105-109 und 103-105-107 angeordnet sind. Entlang jeder der Linien erfolgen jeweils Messungen in den Schritten S1 bis S3 zunächst auf dieselbe Weise, wie im ersten Ausführungsbeispiel dargestellt. Beispielsweise werden entlang der Linie 101-102-103 als Paare für eine jeweilige Messung nacheinander oder gleichzeitig die Ultraschall-Sendeempfänger 101 und 102, 101 und 103 sowie 102 und 103 ausgewählt. Entlang der Linie 103-105-107 werden als Paare die Ultraschall-Sendeempfänger 103 und 105, 105 und 107 und 103 und 107 ausgewählt. Entlang der übrigen Linien erfolgen entsprechende Paarauswahlen. In Schritt S4 werden sodann Ellipsen mit möglichen Reflexionspunkten bestimmt. Die bestimmen Ellipsen liegen somit in vertikalen Schnittebenen durch das Geländefahrzeug 1 entlang der horizontalen Linien 101-102-103, und 104-105-106 und 107-108-109, entlang der vertikalen Linien 101-104-107, 102-105-108 und 103-106-109 und entlang der diagonalen Linien 101-105-109 und 103-105-107. Entlang einer jeweiligen Linie werden in Schritt S4 jeweils drei Ellipsen bestimmt, insgesamt ergeben sich 24 Ellipsen. Sodann wird in Schritt S4 eine Profilfläche von unten an die bestimmten Ellipsen angepasst, um das Profil des Bodens 6 zu bestimmen.

Gemäß dem dritten Ausführungsspiel ist die zu verarbeitende Datenmenge geringer und die Rechenschritte können vereinfacht sein und dementsprechend kann weniger Rechenleistung erforderlich sein. Dennoch kann eine zufriedenstellende Genauigkeit der Bestimmung der minimalen Bodenfreiheit erzielt werden.

Die übrigen Vorteile und Merkmale des ersten und des zweiten Ausführungsbeispiels gelten entsprechend auch für das dritte Ausführungsbeispiel.

Obwohl die vorliegende Erfindung anhand von Ausführungsbeispielen beschrieben wurde, ist sie vielfältig modifizierbar.

Insbesondere sei angemerkt, dass das beschriebene Extrapolieren des bestimmten Profils des Bodens 6 in Fahrtrichtung es Geländefahrzeugs 1 auch bei fahrendem Geländefahrzeug 1 nicht notwendig ist, um die Vorteile der vorgeschlagenen Lösung zu erzielen. Wenn beispielsweise ein von dem Unterboden 2 nach unten vorstehendes Teil, wie eine Ölwanne oder dergleichen, in einem in Fahrtrichtung F hinteren Abschnitt des Geländefahrzeugs 1 angeordnet ist, genügt es, wenn bei fahrendem Geländefahrzeug 1 ein Unterschreiten der minimalen zulässigen Bodenfreiheit in einem vorderen Abschnitt des Geländefahrzeugs 1 festgestellt wird und der Fahrer gewarnt oder das Geländefahrzeug gebremst oder gestoppt wird, um zu vermeiden, dass die Ölwanne im hinteren Abschnitt des Geländefahrzeugs 1 bei Weiterfahrt des Geländefahrzeugs 1 von der durch Unterschreiten der minimalen zulässigen Bodenfreiheit im vorderen Abschnitt des Geländefahrzeugs 1 erkannten Bodenerhebung beschädigt wird. Ein Schwellwert für das Auslösen des den Betrieb des Kraftfahrzeugs 1 betreffenden Vorgang kann in diesem Fall unter Berücksichtigung der Ausmaße der Ölwanne oder dergleichen festgelegt sein.

Die gemäß den Ausführungsbeispielen bestimmten Ellipsen 81-83 oder Ellipsoide können zeitlich und/oder räumlich gemittelt werden, bevor die Tangentiallinie bzw. das Tangentialprofil an die gemittelten Ellipsen bzw. Ellipsoide angepasst wird, um Messabweichungen aufgrund von Fahrtwind und dergleichen zu glätten.

Des einfacheren Verständnisses halber wurde beschrieben, dass die Schritte S1 bis S3 für die verschiedenen Paare von Ultraschall-Sendeempfänger 101-109 nacheinander ausgeführt werden. Es ist jedoch denkbar, dass in Schritt S1 ein Ultraschall-Sendeempfänger 101-109 als erster Ultraschall-Sendeempfänger 101-109 ausgewählt wird und ein Sendesignal sendet, und dass mehrere und vorzugsweise alle übrigen der Ultraschall-Sendeempfänger 101-109 als ein jeweiliger zweiter Ultraschall-Sendeempfänger 101-109 ausgewählt werden und die Schritte S2 für jeden der zweiten Ultraschall-Sendeempfänger 101-109 parallel bzw. zeitgleich ausgeführt werden. Es ist überdies denkbar, dass mehrere und vorzugsweise alle der Ultraschall-Sendeempfänger 101-109 als erste Ultraschall-Sendeempfänger 101-109 ausgewählt werden und jeder der ersten Ultraschall-Sendeempfänger 101-109 ein Sendesignal mit einer unterschiedlichen Sendesignatur sendet. In diesem Fall kann in Schritt 2 für den oder für jeden der ausgewählten zweiten Ultraschall-Sendeempfänger 101-109 ein Demodulieren des Empfangssignalverlaufs erfolgen, um eine Vielzahl von Empfangssignalen, eines für jeden der ersten Ultraschall-Sendeempfänger 101-109, zu ermitteln. Auf diese Weise könne vorteilhafterweise alle Messpunkte zeitgleich innerhalb kürzester Zeit ermittelt werden. Das Verfahren eignet sich somit besonders gut für den Einsatz bei fahrendem Geländefahrzeug 1.

Das Verfahren wurde beispielhaft für ein Geländefahrzeug 1 beschrieben, eignet sich jedoch auch für beliebige andere Fahrzeuge, wie Personenkraftwagen, militärische Fahrzeuge, Amphibienfahrzeuge und dergleichen mehr und bietet hierbei entsprechende Vorteile.

### BEZUGSZEICHENLISTE

- 1: Kraftfahrzeug, Geländefahrzeug
- 2: Unterboden
- 3: Steuervorrichtung
- 4: Leitungsverbindungen
- 5: Anzeigevorrichtung
- 6: Boden
- 9: minimale Bodenfreiheit
- 11: Rad
- 61: flacher Abschnitt des Bodens
- 62: schräger Abschnitt des Bodens
- 71-73: Ausbreitungswege
- 81-83: Ellipsen (Ellipsoide) mit möglichen Reflexionspunkten
- 101-109: Ultraschall-Sendeempfänger (Ultraschall-Sendeempfänger)

## Patentansprüche

1. Verfahren zur Überwachung einer Bodenfreiheit unter einem Kraftfahrzeug (1), an dessen Unterboden (2) mehrere zueinander beabstandete Ultraschall-Sendeempfänger (101-109) angeordnet sind, umfassend:
a) Auswählen (S1) eines ersten Ultraschall-Sendeempfängers (101-109) unter den mehreren Ultraschall-Sendeempfängern (101-109) und Ansteuern des ersten Ultraschall-Sendeempfängers zum Senden eines Sendesignals;
b) Auswählen (S2) eines zweiten Ultraschall-Sendeempfängers (101-109) unter den mehreren Ultraschall-Sendeempfängern (101-109) und Ansteuern des zweiten Ultraschall-Sendeempfängers (101-109) zum Empfangen eines Empfangssignals, welches eine Reflexion des in Schritt a) gesendeten Sendesignals ist; und
c) Wiederholen (S3) der Schritte a) und b), wobei verschiedene Paare aus einem ersten und einem zweiten Ultraschall-Sendeempfänger (101-109) ausgewählt werden, um ein jeweiliges Echosignal zu empfangen;
**gekennzeichnet durch**,
d) Bestimmen (S4) eines Profils eines Bodens unter dem Kraftfahrzeug (1) anhand der empfangenen Echosignale; und
e) Bestimmen (S5) einer minimalen Bodenfreiheit (9) unter dem Kraftfahrzeug (1) durch Vergleich des bestimmten Profils des Bodens (6) mit einem Unterbodenprofil des Kraftfahrzeugs (1).

2. Verfahren nach Anspruch 1,
wobei in Schritt c) (S3) mindestens drei verschiedene Paare ausgewählt werden, wobei mindestens ein Ultraschall-Sendeempfänger (101-109) der mindestens drei verschiedenen Paare nicht entlang einer geraden Linie mit allen anderen der mehreren Ultraschall-Sendeempfängern (101-109) der mindestens drei verschiedenen Paare an dem Unterboden (2) des Kraftfahrzeugs (1) angeordnet ist.

3. Verfahren nach Anspruch 2,
wobei in Schritt d) (S4) für jedes Echosignal anhand einer Signallaufzeit zwischen dem Senden des zugehörigen Sendesignals und dem Empfangen des Echosignals sowie anhand von Einbaupositionen des ersten und des zweiten Ultraschall-Sendeempfängers (101-109), mit denen das Sendesignal gesendet und das Echosignal empfangen wurde, eine Ellipse (81-83) oder ein Ellipsoid mit möglichen Reflexionspunkten bestimmt wird, an denen das Sendesignal reflektiert worden sein kann; und das Profil des Bodens (6) durch Anpassen einer Profilfläche an die bestimmten Ellipsen (81-83) oder Ellipsoide bestimmt wird.

4. Verfahren nach Anspruch 3,
wobei in Schritt d) (S4) ferner ein zeitliches und/oder räumliches Mitteln der bestimmten Ellipsen (81-83) oder Ellipsoiden erfolgt.

5. Verfahren nach einem der vorherigen Ansprüche, ferner umfassend:
f) Auslösen (S6) eines den Betrieb des Kraftfahrzeugs (1) betreffenden Vorgangs in Abhängigkeit von der bestimmten minimalen Bodenfreiheit (9).

6. Verfahren nach Anspruch 5,
wobei Schritt f) (S6) umfasst:
Ausgeben einer Warnung an einen Fahrer des Kraftfahrzeugs (1), wenn die minimale Bodenfreiheit (9) einen Schwellwert unterschreitet, und/oder
Anzeigen der bestimmten minimalen Bodenfreiheit (9) mittels einer Anzeigevorrichtung (5), und/oder
Anzeigen einer grafischen Darstellung des bestimmten Profils der Bodenfläche (6) unter dem Kraftfahrzeug (1) mittels einer Anzeigevorrichtung (5) und/oder
Veranlassen eines automatischen Bremsens und/oder Stoppens des Kraftfahrzeugs (1), wenn die minimale Bodenfreiheit (9) einen Schwellwert unterschreitet, und/oder
Anheben des Fahrzeugs mittels eines höhenverstellbaren Fahrwerks, wenn die minimale Bodenfreiheit (9) einen Schwellwert unterschreitet.

7. Verfahren zur Überwachung einer Bodenfreiheit nach Anspruch 6,
wobei der Schwellwert in Abhängigkeit von einer Fahrgeschwindigkeit des Kraftfahrzeugs (1) gewählt wird.

8. Verfahren zur Überwachung einer Bodenfreiheit nach einem der vorhergehenden Ansprüche,
wobei das Verfahren durchgeführt wird, während das Kraftfahrzeug (1) fährt.

9. Verfahren nach Anspruch 8,
wobei in Schritt d) (S4) das bestimmte Profil des Bodens (6) in einer Fahrtrichtung des Kraftfahrzeugs (1) extrapoliert wird und in Schritt e) das extrapolierte Profil mit einem in der Fahrtrichtung des Kraftfahrzeugs (1) extrapolierten Unterbodenprofil des Kraftfahrzeugs (1) verglichen wird, um eine extrapolierte minimale Bodenfreiheit als die minimale Bodenfreiheit (9) zu bestimmen.

10. Verfahren zur Überwachung einer Bodenfreiheit nach einem der vorhergehenden Ansprüche,
wobei das Wiederholen in Schritt c) (S3) dergestalt erfolgt, dass in Schritt a) ein erster Ultraschall-Sendeempfänger (101-109) ausgewählt wird und Schritt b) (S2) zeitgleich mit mehreren verschiedenen zweiten Ultraschall-Sendeempfängern (101-109) durchgeführt wird.

11. Verfahren nach einem der vorhergehenden Ansprüche,
wobei das Wiederholen in Schritt c) (S3) dergestalt ausgeführt wird, dass zeitgleich mehrere Schritte a) mit mehreren verschiedenen ersten Ultraschall-Sendeempfängern (101-109) durchgeführt werden, die derart angesteuert werden, dass jeder der ersten Ultraschall-Sendeempfänger (101-109) ein Sendesignal mit einer unterschiedlichen Sendesignatur sendet, und in Schritt b) ein Empfangssignalverlauf des zweiten Ultraschall-Sendeempfängers (101-109) demoduliert wird, um für jedes Paar aus einem der ersten Ultraschall-Sendeempfänger (101-109) und dem zweiten Ultraschall-Sendeempfänger (101-109) ein jeweiliges Empfangssignal zu erhalten.

12. Verfahren nach einem der vorhergehenden Ansprüche,
wobei in Schritt b) in einem Empfangssignalverlauf des zweiten Ultraschall-Sendeempfängers (101-109) ein Echosignal, welches zeitlich als erstes nach einem Zeitpunkt des Sendens des Sendesignals empfangen wird, als das empfangene Echosignal identifiziert wird, das dem in Schritt a) gesendeten Sendesignal entspricht.

13. Computerprogrammprodukt, umfassend Befehle, die bei der Ausführung durch eine mit den mehreren Ultraschall-Sendeempfängern (101-109) kommunikativ verbundene Computervorrichtung (3) diese dazu veranlassen, das Verfahren nach einem der vorhergehenden Ansprüche auszuführen.

14. Vorrichtung (3) zur Überwachung einer Bodenfreiheit unter einem Kraftfahrzeug (1), an dessen Unterboden (2) mehrere zueinander beabstandete Ultraschall-Sendeempfänger (101-109) angeordnet sind, wobei die Vorrichtung (3) kommunikativ mit den mehreren Ultraschall-Sendeempfängern (101-109) verbunden und dazu eingerichtet ist, ein Verfahren nach einem der Ansprüche 1 bis 13 durchzuführen.

15. Kraftfahrzeug (1), an dessen Unterboden (2) mehrere zueinander beabstandete Ultraschall-Sendeempfänger (101-109) angeordnet sind, mit einer Vorrichtung (3) nach Anspruch 14.

## Claims

1. Method for monitoring a ground clearance beneath a motor vehicle (1), on the underbody (2) of which are arranged a plurality of ultrasonic transceivers (101-109) spaced apart from one another, comprising:
a) selecting (S1) a first ultrasonic transceiver (101-109) from among the plurality of ultrasonic transceivers (101-109) and activating the first ultrasonic transceiver to send a transmission signal;
b) selecting (S2) a second ultrasonic transceiver (101-109) from among the plurality of ultrasonic transceivers (101-109) and activating the second ultrasonic transceiver (101-109) to receive a reception signal which is a reflection of the transmission signal sent in step a); and
c) repeating (S3) steps a) and b), wherein different pairs consisting of a first and a second ultrasonic transceiver (101-109) are selected to receive a respective echo signal;
**characterized by**
d) determining (S4) a profile of a ground beneath the motor vehicle (1) on the basis of the received echo signals; and
e) determining (S5) a minimum ground clearance (9) beneath the motor vehicle (1) by comparing the determined profile of the ground (6) with an underbody profile of the motor vehicle (1).

2. Method according to Claim 1,
wherein in step c) (S3) at least three different pairs are selected, wherein at least one ultrasonic transceiver (101-109) of the at least three different pairs is not arranged along a straight line with all the other of the plurality of ultrasonic transceivers (101-109) of the at least three different pairs on the underbody (2) of the motor vehicle (1).

3. Method according to Claim 2,
wherein in step d) (S4), for each echo signal, on the basis of a signal time of flight between the sending of the associated transmission signal and the reception of the echo signal, and on the basis of installation positions of the first and second ultrasonic transceivers (101-109) with which the transmission signal was sent and the echo signal was received, an ellipse (81-83) or an ellipsoid is determined with possible reflection points at which the transmission signal may have been reflected; and the profile of the ground (6) is determined by fitting a profile surface to the determined ellipses (81-83) or ellipsoids.

4. Method according to Claim 3,
wherein in step d) (S4) a temporal and/or spatial averaging of the determined ellipses (81-83) or ellipsoids is also carried out.

5. Method according to any of the preceding claims, further comprising:
f) triggering (S6) a procedure affecting the operation of the motor vehicle (1) in accordance with the determined minimum ground clearance (9).

6. Method according to Claim 5,
wherein step f) (S6) comprises:
issuing a warning to a driver of the motor vehicle (1) if the minimum ground clearance (9) falls below a threshold value, and/or
displaying the determined minimum ground clearance (9) by means of a display device (5), and/or
displaying a graphical representation of the determined profile of the ground surface (6) beneath the motor vehicle (1) by means of a display device (5) and/or
initiating an automatic braking and/or stopping of the motor vehicle (1) if the minimum ground clearance (9) falls below a threshold value, and/or
raising the vehicle using a height-adjustable chassis if the minimum ground clearance (9) falls below a threshold value.

7. Method for monitoring a ground clearance according to Claim 6,
wherein the threshold value is chosen depending on a driving speed of the motor vehicle (1).

8. Method for monitoring a ground clearance according to any of the preceding claims,
wherein the method is carried out while the motor vehicle (1) is driving.

9. Method according to Claim 8,
wherein in step d) (S4) the determined profile of the ground (6) is extrapolated in a direction of travel of the motor vehicle (1) and in step e) the extrapolated profile is compared with an underbody profile of the motor vehicle (1) extrapolated in the driving direction of the motor vehicle (1), to determine an extrapolated minimum ground clearance as the minimum ground clearance (9).

10. Method for monitoring a ground clearance according to any of the preceding claims,
wherein the repetition in step c) (S3) is carried out in such a way that in step a) a first ultrasonic transceiver (101-109) is selected and step b) (S2) is carried out simultaneously with a plurality of different second ultrasonic transceivers (101-109).

11. Method according to any of the preceding claims,
wherein the repetition in step c) (S3) is carried out in such a way that multiple steps a) are carried out simultaneously with a plurality of different first ultrasonic transceivers (101-109), which are activated in such a way that each of the first ultrasonic transceivers (101-109) sends a transmission signal with a different transmission signature, and in step b) a reception signal waveform of the second ultrasonic transceiver (101-109) is demodulated to obtain a respective reception signal for each pair consisting of one of the first ultrasonic transceivers (101-109) and the second ultrasonic transceiver (101-109).

12. Method according to any of the preceding claims,
wherein in step b), in a reception signal waveform of the second ultrasonic transceiver (101-109), an echo signal which is the first to be received after the time of sending the transmission signal, is identified as the received echo signal which corresponds to the transmission signal sent in step a).

13. Computer program product comprising commands which, during their execution by a computer device (3) communicatively connected to the plurality of ultrasonic transceivers (101-109), cause said computer device to carry out the method according to any of the preceding claims.

14. Device (3) for monitoring a ground clearance beneath a motor vehicle (1), on the underbody (2) of which are arranged a plurality of ultrasonic transceivers (101-109) spaced apart from one another, wherein the device (3) is communicatively connected to the plurality of ultrasonic transceivers (101-109) and is configured to carry out a method according to any of Claims 1 to 13.

15. Motor vehicle (1), on the underbody (2) of which are arranged a plurality of ultrasonic transceivers (101-109) spaced apart from one another, having a device (3) according to Claim 14.

## Revendications

1. Procédé de surveillance d'une garde au sol sous un véhicule automobile (1), dont le soubassement (2) est doté d'une pluralité d'émetteurs-récepteurs à ultrasons (101-109) espacés les uns des autres, comprenant :
a) la sélection (S1) d'un premier émetteur-récepteur à ultrasons (101-109) parmi la pluralité d'émetteurs-récepteurs à ultrasons (101-109) et la commande du premier émetteur-récepteur à ultrasons pour émettre un signal d'émission ;
b) la sélection (S2) d'un second émetteur-récepteur à ultrasons (101-109) parmi la pluralité d'émetteurs-récepteurs à ultrasons (101-109) et la commande du second émetteur-récepteur à ultrasons (101-109) pour recevoir un signal de réception, qui est une réflexion du signal d'émission émis à l'étape a) ; et
c) la répétition (S3) des étapes a) et b), différentes paires constituées d'un premier et d'un second émetteur-récepteur à ultrasons (101-109) étant sélectionnées afin de recevoir des signaux d'écho respectifs ;
**caractérisé par**
d) la détermination (S4) d'un profil du sol sous le véhicule automobile (1) sur la base des signaux d'écho reçus ; et
e) la détermination (S5) d'une garde au sol minimale (9) sous le véhicule automobile (1) en comparant le profil déterminé du sol (6) à un profil de soubassement du véhicule automobile (1).

2. Procédé selon la revendication 1,
dans lequel, à l'étape c) (S3), au moins trois paires différentes sont sélectionnées, au moins un émetteur-récepteur à ultrasons (101-109) des au moins trois paires différentes n'étant pas aligné avec tous les autres de la pluralité d'émetteurs-récepteurs à ultrasons (101-109) des au moins trois paires différentes sur le soubassement (2) du véhicule automobile (1).

3. Procédé selon la revendication 2,
dans lequel, à l'étape d) (S4), pour chaque signal d'écho, une ellipse (81-83) ou un ellipsoïde, qui comporte des points de réflexion possibles où le signal d'émission a pu être réfléchi, est déterminé (e) sur la base d'un temps de propagation du signal entre l'émission du signal d'émission correspondant et la réception du signal d'écho, ainsi que sur la base des positions d'installation du premier et du second émetteur-récepteur à ultrasons (101-109) avec lesquels le signal d'émission a été émis et le signal d'écho a été reçu ; et le profil du sol (6) est déterminé par ajustement d'une surface de profil aux ellipses (81-83) ou ellipsoïdes déterminé(e)s.

4. Procédé selon la revendication 3,
dans lequel, à l'étape d) (S4), un moyennage temporel et/ou spatial des ellipses (81-83) ou ellipsoïdes déterminé(e)s est également effectué.

5. Procédé selon l'une quelconque des revendications précédentes, comprenant en outre :
f) le déclenchement (S6) d'une opération concernant le fonctionnement du véhicule automobile (1) en fonction de la garde au sol minimale (9) déterminée.

6. Procédé selon la revendication 5,
dans lequel l'étape f) (S6) comprend :
l'envoi d'un avertissement à un conducteur du véhicule automobile (1) lorsque la garde au sol minimale (9) s'abaisse en-dessous d'un seuil, et/ou
l'affichage de la garde au sol minimale (9) déterminée au moyen d'un dispositif d'affichage (5), et/ou
l'affichage d'une représentation graphique du profil déterminé de la surface du sol (6) sous le véhicule automobile (1) au moyen d'un dispositif d'affichage (5), et/ou
le déclenchement d'un freinage et/ou d'un arrêt automatique du véhicule automobile (1) lorsque la garde au sol minimale (9) s'abaisse en-dessous d'un seuil, et/ou
le soulèvement du véhicule au moyen d'un châssis réglable en hauteur si la garde au sol minimale (9) s'abaisse en-dessous d'un seuil.

7. Procédé de surveillance d'une garde au sol selon la revendication 6,
dans lequel le seuil est choisi en fonction d'une vitesse de déplacement du véhicule automobile (1).

8. Procédé de surveillance d'une garde au sol selon l'une quelconque des revendications précédentes,
dans lequel le procédé est mis en œuvre pendant que le véhicule automobile (1) se déplace.

9. Procédé selon la revendication 8,
dans lequel, à l'étape d) (S4), le profil déterminé du sol (6) est extrapolé dans une direction de déplacement du véhicule automobile (1) et, à l'étape e), le profil extrapolé est comparé à un profil de soubassement du véhicule automobile (1) extrapolé dans la direction de déplacement du véhicule automobile (1) pour déterminer une garde au sol minimale extrapolée comme étant la garde au sol minimale (9).

10. Procédé de surveillance d'une garde au sol selon l'une quelconque des revendications précédentes,
dans lequel la répétition se produisant à l'étape c) (S3) est effectuée de telle sorte qu'à l'étape a), un premier émetteur-récepteur à ultrasons (101-109) est sélectionné et l'étape b) (S2) est exécutée simultanément avec plusieurs seconds émetteurs-récepteurs à ultrasons (101-109) différents.

11. Procédé selon l'une quelconque des revendications précédentes,
dans lequel la répétition se produisant à l'étape c) (S3) est effectuée de telle sorte que plusieurs étapes a) sont exécutées simultanément avec plusieurs premiers émetteurs-récepteurs à ultrasons (101-109) différents, qui sont commandés de manière à ce que chacun des premiers émetteurs-récepteurs à ultrasons (101-109) émette un signal d'émission avec une signature d'émission différente, et à l'étape b), une évolution du signal de réception du second émetteur-récepteur à ultrasons (101-109) est démodulée pour obtenir un signal de réception respectif pour chaque paire constituée de l'un des premiers émetteurs-récepteurs à ultrasons (101-109) et du second émetteur-récepteur à ultrasons (101-109).

12. Procédé selon l'une quelconque des revendications précédentes,
dans lequel, à l'étape b), dans une évolution du signal de réception du second émetteur-récepteur à ultrasons (101-109), un signal d'écho reçu en premier dans le temps après un instant d'émission du signal d'émission est identifié comme étant le signal d'écho reçu correspondant au signal d'émission émis lors de l'étape a).

13. Produit programme d'ordinateur, comprenant des instructions qui, lorsqu'elles sont exécutées par un dispositif informatique (3) en communication avec la pluralité d'émetteurs-récepteurs à ultrasons (101-109), amènent ce dernier à mettre en œuvre le procédé selon l'une quelconque des revendications précédentes.

14. Dispositif (3) de surveillance d'une garde au sol sous un véhicule automobile (1), dont le soubassement (2) est doté d'une pluralité d'émetteurs-récepteurs à ultrasons (101-109) espacés les uns des autres, le dispositif (3) étant en communication avec la pluralité d'émetteurs-récepteurs à ultrasons (101-109) et étant conçu pour mettre en œuvre un procédé selon l'une quelconque des revendications 1 à 13.

15. Véhicule automobile (1), dont le soubassement (2) est doté d'une pluralité d'émetteurs-récepteurs à ultrasons (101-109) espacés les uns des autres, comprenant un dispositif (3) selon la revendication 14.
